# EUROPEAN PATENT APPLICATION

(11) **EP 1 237 221 A2**
(43) Date of publication of application: **04.09.2002**
(21) Application number: 02075618.5
(22) Date of filing: 15.02.2002
(51) Int. Cl.: H01M 10/40, H01M 10/42

(54) **Method of preparation of lithium battery**

(30) Priority: 02.03.2001 US 798427
(71) Applicant: Delphi Technologies, Inc., Troy, MI 48007 (US)
(72) Inventor: Manev, Vesselin G., Flint, MI 48556 (US); Young, Daniel G., Davison, MI 48423 (US); Parsian, Mohammad, Swartz Creek, MI 48473 (US)
(74) Representative: Denton, Michael John

(57) **Abstract**

A method for preparing lithium-ion and lithium-ion polymer batteries to reduce water content and cell impedance. A battery having improved calendar life is prepared by electrochemically treating the activated cell by applying a voltage to the cell to react oxygen provided or trapped in the cell with moisture present as an unavoidable impurity. The electrochemical treatment of the present invention decreases the water content in the cell, thereby lowering cell impedance and extending battery life.

## Description

### Field of the Invention

This invention relates to a method of preparation of lithium batteries, in particular lithium-ion and lithium-ion polymer batteries.

### Background of the Invention

Lithium-ion cells and batteries are secondary (i.e., rechargeable) energy storage devices well known in the art. The lithium-ion cell, known also as a rocking chair type lithium battery, typically comprises a carbonaceous anode (negative electrode) that is capable of intercalating lithium ions, a lithium-retentive cathode (positive electrode) that is also capable of intercalating lithium ions, and a non-aqueous, lithium-ion-conducting electrolyte therebetween.

The carbon anode comprises any of the various types of carbon (e.g., graphite, coke, carbon fiber, etc.) which are capable of reversibly storing lithium species, and which are bonded to an electrically conductive current collector (e.g. copper foil) by means of a suitable organic binder (e.g., polyvinyllidene difluoride, PVdF).

The cathode comprises such materials as transition metal chalcogenides that are bonded to an electrically conductive current collector (e.g., aluminum foil) by a suitable organic binder. Chalcogenide compounds include oxides, sulfides, selenides, and tellurides of such metals as vanadium, titanium, chromium, copper, molybdenum, niobium, iron, nickel, cobalt and manganese. Lithiated transition metal oxides are at present the preferred positive electrode intercalation compounds. Examples of suitable cathode materials include LiMnO₂, LiCoO₂ and LiNiO₂, their solid solutions and/or their combination with other metal oxides.

The electrolyte in such lithium-ion cells comprises a lithium salt dissolved in a non-aqueous solvent which may be (1) completely liquid, (2) an immobilized liquid, (e.g., gelled or entrapped in a polymer matrix), or (3) a pure polymer. Known polymer matrices for entrapping the electrolyte include polyacrylates, polyurethanes, polydialkylsiloxanes, polymethacrylates, polyphosphazenes, polyethers, and polycarbonates, and may be polymerized in situ in the presence of the electrolyte to trap the electrolyte therein as the polymerization occurs. Known polymers for pure polymer electrolyte systems include polyethylene oxide (PEO), polymethylene-polyethylene oxide (MPEO), or polyphosphazenes (PPE). Known lithium salts for this purpose include, for example, LiPF₆, LiClO₄, LiSCN, LiAlCl₄, LiBF₄, LiN(CF₃SO₂)₂, LiCF₃SO₃, LiC(SO₂CF₃)₃, LiO₃SCF₂CF₃, LiC₆F₅SO₃, LiO₂CF₃, LiAsF₆, and LiSbF₆. Known organic solvents for the lithium salts include, for example, alkylcarbonates (e.g., propylene carbonate, ethylene carbonate), dialkyl carbonates, cyclic ethers, cyclic esters, glymes, lactones, formates, esters, sulfones, nitrites, and oxazolidinones.

Lithium-ion cells made from pure polymer electrolytes, or liquid electrolytes entrapped in a polymer matrix, are known in the art as □lithium-ion polymer□cells, and the electrolytes therefore are known as polymeric electrolytes. Lithium-polymer cells are often made by laminating thin films of the anode, cathode and electrolyte together wherein the electrolyte layer is sandwiched between the anode and cathode layers to form an individual cell, and a plurality of such cells are bundled together to form a higher energy/voltage battery.

During the charge process in these lithium ion rechargeable batteries, lithium ions are deintercalated (or released) from the positive electrode and are intercalated (or inserted) into layer planes of the carbonous material. During the discharge, the lithium ions are released from the negative electrode and are inserted into the positive electrode.

It is generally accepted that during the first cycle of a rechargeable lithium-ion cell, part of the cell capacity is used to form a passivating layer or film on the surface of the electrodes (particularly the carbonaceous anode). This passivating layer is often called a solid electrolyte interface (SEI) and contains a relatively complex ratio of several passivating film components, such as lithium-containing compositions (e.g., Li₂CO₃, Li₂O, and Li-alkyl CO₃). The SEI plays a major role in determining electrode and battery behavior and properties, including irreversible capacity loss, lithium intercalation-deintercalation efficiency, cycle life, and the like. The SEI separates the negative electrodes from the electrolytes and eliminates (or drastically reduces) the transfer of electrons from the electrodes to the electrolytes and also the transfer of solvent molecules and salt anions from the electrolytes to the electrodes. The SEI formed on account of the irreversible capacity loss in fact stabilizes the negative electrode and dramatically suppresses further electrolyte-negative electrode interaction, which causes electrolyte decomposition and undesirable gas formation.

For a proper function of this rocking chair type charge-discharge mechanism, the surface compositions and properties of both positive and negative electrodes intercalation compound are of substantial importance. In a battery or a cell utilizing a lithium-containing electrode, it is important to eliminate as many impurities as possible which may affect cell performance. The main impurity that contributes to increased cell impedance is water.

It is practically impossible to completely dry any component in the battery. First, because this will be impractical and second, because longer drying times as well as handling of materials in totally water free environments is essentially impossible. Also, sometimes water is not simply superficially included in the cell component, but rather it is relatively tightly entrained or bound to the cathode active material, essentially being tightly retained by the cathode active material, for example, lithium manganese oxide. Removing it requires elevated drying temperatures, high enough to decompose elements of the battery or even the active material itself.

It is known in the art that H₂O traces in the electrolyte may produce HF or other hydrogen-containing acids in the electrolyte, which may cause cell component decomposition. Further, the HF may cause precipitation of LiF on the surface of the cell electrodes, which has a blocking effect of lithium intercalation processes on both electrodes. Thus, an increase in cell moisture substantially increases electrode impedance and respectively decreases cell power performance and cell capacity at a higher charge-discharge rate.

In addition, the moisture even at trace levels produces LiOH on the negative electrode surface during the SEI formation on the negative electrode. This additional phase of LiOH in the SEI composition comprising mainly lithium carbonates increases its porosity, decreases its density and respectively increases self discharge of the negative electrode, which results in an irreversible capacity loss. This loss decreases cell energy density and battery cycling and shelf life performance.

Further, the increase in porosity of the SEI layer caused by an increase in the cell moisture increases SEI thickness, which has a strong negative effect on the cell safety performance because the SEI substance tends to react with the electrolyte at elevated temperatures. Thus, the increase of the cell moisture content decreases the temperature for initiation of cell self-heating, which causes cell thermal runaway at much lower temperatures. The moisture also catalyzes generation of decomposition gaseous products in the cell such as carbon monoxide, carbon dioxide, and methane, which have additional negative effect on cell integrity and cell safety performance. As a result, the increase in cell moisture decreases the cell□s, power density, energy density and its cycling, shelf life and safety performance.

Loss of performance due to moisture impurities has led to the selection of solvents, salts and desiccants which may reduce moisture content or acidic descants to reduce acid products caused by the cell moisture. For example, according to U.S. Patent Nos. 5,419,985 and 5,849,429, acidic descants and/or hydrolyzable compounds may be added to the electrolyte. These compounds are used to take up water or hydrolyze with water and then the hydrolysis products are removed before the cell components are assembled. However, because the source of moisture impurities which cause adverse reaction may be from any component within the cell, including the negative electrode and positive electrode, it is very difficult to completely eliminate the moisture prior to cell assembly. The use of desiccants such as silica, alumina and phosphoric anhydride in the cathode composite is proposed in U.S. Patent No. 5,474,858. Apart from the fact that the desiccants are inert materials, which decrease the cell□s, specific power and energy, their strong moisture adsorption property may cause increase of cell moisture content during the cell assembly. Acidic descants such as Al₂O₃ (U.S. Patent No. 5,168,019), Li₂CO₃ (U.S. Patent No. 5,427,875) or other basic compounds (U.S. Patent No. 5,846,673) are also proposed. However, neutralization of only the acidic products will compensate only a portion of the negative effects caused by moisture impurities in the cell.

In view of the shortcomings associated with the prior art, there is a need for methods which may drastically reduce cell moisture content providing cells with improved cycle and calendar life, capacity, and power capability.

### Summary of the Invention

The present invention provides a method for preparing lithium batteries, specifically lithium-ion and lithium-ion polymer batteries, in which a voltage treatment is effective to reduce water content in the battery cell thereby reducing cell impedance. To this end, and in accordance with the present invention, a battery cell is provided to have a negative electrode, a positive electrode and a separator therebetween. One or both of the electrodes includes carbon. The cell is then activated with a lithium salt-based electrolyte. Moisture is present in the cell as an impurity. Oxygen is also present in the cell, either by purposeful addition, by virtue of being a component of the moisture impurity, and/or by virtue of its presence in the environment in which the cell is assembled. The assembled cell is then subjected to an electrochemical treatment in which a voltage is applied to keep the potential of the carbon-containing electrode more positive than the potential necessary for formation of a SEI by reduction of the electrolyte on the carbon-containing electrode. For example, the voltage is selected to keep the potential of the carbon-containing electrode in the range of about 1.0 to about 3.0V versus a lithium reference electrode. The voltage is also applied so as to simultaneously keep the carbon-containing electrode more negative than the equilibrium potential of the oxygen to insure oxygen reduction on the negative carbon electrode. The voltage is applied long enough for the cell moisture to combine in a solid state compound, for example by reacting the oxygen with the moisture in the cell. The treatment may be repeated during battery cell cycling utilizing oxygen generated by the cell during use to reduce the moisture content.

In one example of the present invention, the cell includes a negative carbon electrode and a transition metal chalcogenide positive electrode. In another example of the present invention, the cell includes a negative electrode and a transition metal chalcogenide composite positive electrode containing a carbon additive. A lithium battery prepared in accordance with the present invention exhibits significantly lower water content and cell impedance than untreated batteries, and consequently exhibits significantly better elevated temperature calendar life.

### Brief Description of the Drawings

The accompanying drawings, which are incorporated in and constitute a part of this specification, illustrate embodiments of the invention and, together with a general description of the invention given above, and the detailed description given below, serve to explain the principles of the invention.
FIG. 1 depicts the proposed reaction mechanism induced by the voltage treatment of the present invention, and the result thereof;
FIG. 2 graphically depicts the electrochemical impedance of treated cells of the present invention versus untreated cells of the prior art;
FIG. 3 graphically depicts the charge and discharge power of cells of the present invention compared to the power of untreated reference cells of the prior art;
FIG. 4 graphically depicts the electrochemical impedance of a test cell of the present invention versus the electrochemical impedance of a test reference cell; and
FIG. 5 graphically depicts the impedance response of test cells of the present invention and test cells of the prior art during elevated temperature calendar life tests.

### Detailed Description

The present invention provides a method for preparing lithium batteries, in particular lithium-ion and lithium-ion polymer batteries having improved power, cycling and storage performance. To this end, and in accordance with the present invention, the lithium-ion cell is electrochemically treated prior to formation of a passivating film on a carbon-containing electrode, typically the negative electrode (anode). First, an anode (negative electrode) is positioned opposite a lithium-retention cathode (positive electrode) with a lithium salt-based electrolyte/separator therebetween. One or both of the electrodes must contain carbon. Moisture is present in the cell as an unavoidable impurity. In one embodiment of the present invention, oxygen is provided in the cell, such as by dissolving oxygen in the electrolyte, or by adsorbing oxygen onto at least one of the electrodes. Alternatively, oxygen may become trapped in the cell from the environment in which the cell is assembled, which is typically a dry room and/or dry box. At a minimum, oxygen is present in the cell as a component of H₂O, present as an unavoidable impurity. Prior to the first discharge-charge cycle of the cell, the cell is electrochemically treated by applying a voltage to the cell. The voltage is selected to keep the potential of the carbon-containing electrode(s) more positive than the potential necessary for SEI formation by reduction of electrolyte on the carbon-containing electrode(s), and is further selected to keep the potential of the carbon-containing electrode(s) more negative than the equilibrium potential of the oxygen to insure that oxygen reduction occurs on the carbon-containing electrode(s). For example, the voltage applied for the electrochemical pretreatment is in the range of 0.1-2.8V, selected to keep the carbon-containing electrode potential in the range of 1.0-3.0V versus a Li/Li⁺ reference electrode.

The voltage may be applied by an external source. Further, the electrochemical pretreatment may be a float charge or float discharge, or a combination thereof at the predetermined voltage. Alternatively, the electrochemical pretreatment may be a voltage sweep or voltage pulse, or a combination thereof at the predetermined voltage.

The applied voltage may be for a period of about 1 hour to 5 days, for example. More particularly, the voltage is applied for a period of time sufficient to cause a reaction between the oxygen in the cell and the moisture impurity in the cell. In an embodiment of the present invention, the partial pressure of oxygen of the cell prior to the electrochemical treatment is maintained in the range of about 0.0001-1.0 atm, for example in the range of about 0.001-0.1 atm. In yet another embodiment of the present invention, the electrochemical pretreatment is performed at a temperature in the range of about -40 to about 120□C.

During operation or cycling of a battery cell, additional oxygen and moisture are generated. Thus, the electrochemical treatment may be repeated periodically throughout the calendar life of the battery to reduce the moisture, thereby further prolonging the battery calendar life. Alternatively, the initial pre-formatting treatment may be skipped, but with periodic treatments throughout the calendar life of the battery.

In one example of the present invention, a carbon anode is positioned opposite a transition metal chalcogenide cathode with a lithium salt-based electrolyte/separator therebetween. Again, moisture is present in the cell as an unavoidable impurity. Optionally, additional oxygen may be provided in the cell. Prior to the first discharge-charge cycle of the cell, the cell is electrochemically treated by a applying a voltage to the cell. The voltage is selected to keep the potential of the negative carbon electrode more positive than the potential necessary for SEI formation by reduction of electrolyte on the negative electrode, and is further selected to keep the potential of the negative carbon electrode more negative than the equilibrium potential of the oxygen to insure that oxygen reduction occurs on the negative carbon electrode. For example, the voltage applied for the electrochemical pretreatment is in the range of 0.1-2.8V, selected to keep the negative electrode potential in the range of 1.0-2.9V versus a Li/Li⁺ reference electrode.

In another example of the present invention, an anode is positioned opposite a transition metal chalcogenide composite cathode containing a carbon additive with a lithium salt-based electrolyte/separator therebetween. Again, moisture is present in the cell as an unavoidable impurity. Optionally, additional oxygen may be provided in the cell. Prior to the first discharge-charge cycle of the cell, the cell is electrochemically treated by a applying a voltage to the cell. The voltage is selected to keep the potential of the positive carbon-containing electrode more positive than the potential necessary for SEI formation by reduction of electrolyte on the carbon additive in the positive electrode, and is further selected to keep the potential of the positive carbon-containing electrode more negative than the equilibrium potential of the oxygen to insure that oxygen reduction occurs at least on the carbon additive in the positive electrode. For example, the voltage applied for the electrochemical pretreatment is in the range of 1.0-2.8V, selected to keep the positive electrode potential of 1.0-3.0V versus a Li/Li⁺ reference electrode.

A battery prepared by the method of the present invention exhibits a decrease in cell impedance and a respective increase in cell power capability. This improvement in electrochemical performance is believed to be caused by a decrease in the water content within the cell. This decrease in water content may be caused by the electrochemical reduction of oxygen on the carbon-containing electrode, for example the negative carbon electrode. A negative carbon electrode is known to be one of the best catalysts for oxygen reduction. In the presence of water in the voltage range described above, the oxygen reduction may occur on the negative carbon electrode according to the following reaction:

2H₂O + O₂ + 4e⁻ □ 4OH (1)

The simultaneous respective reaction on the positive electrode will be as follows:

LiMO₂ □ Li₁₋ₓMO₂ + xLi⁺ + xe⁻ (2)

where M represents the transition metal or solid solution of transition metals typically used as positive electrode materials in lithium-ion batteries, and x represents the number of electrons or respectively the number of lithium ions exchanged.

In the presence of lithium ions, which are present in lithium salt-based electrolytes, the generation of OH- ions on the carbon surface is expected to produce precipitation of solid state compounds, such as LiOH. The lithium ions used for the LiOH precipitation will be compensated in the cell electrolyte by reaction (2).

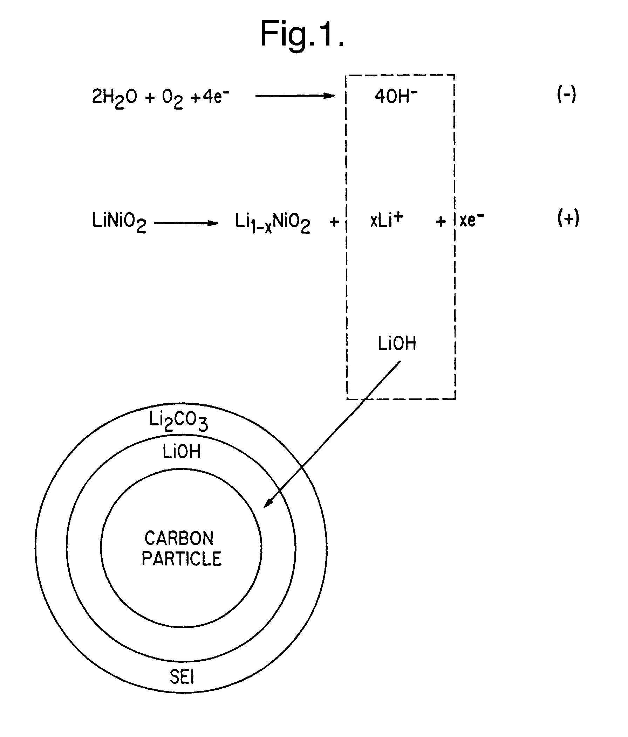

It is anticipated that the LiOH precipitated on the carbon surface will be covered during cell formation cycles by the solid electrolyte interface (SEI) passivation layer formed during this process on the carbon electrode active material. Thus, it is likely that the SEI layer will encapsulate the LiOH precipitated on the carbon surface. The believed reaction mechanism in a system having a lithiated nickel oxide cathode, the respective LiOH precipitation and the expected encapsulation by the SEI layer formation is illustrated in FIG. 1.

A similar mechanism is believed to occur where the positive electrode contains a carbon additive. However, the present invention is not limited to said proposed mechanism.

### EXAMPLE 1

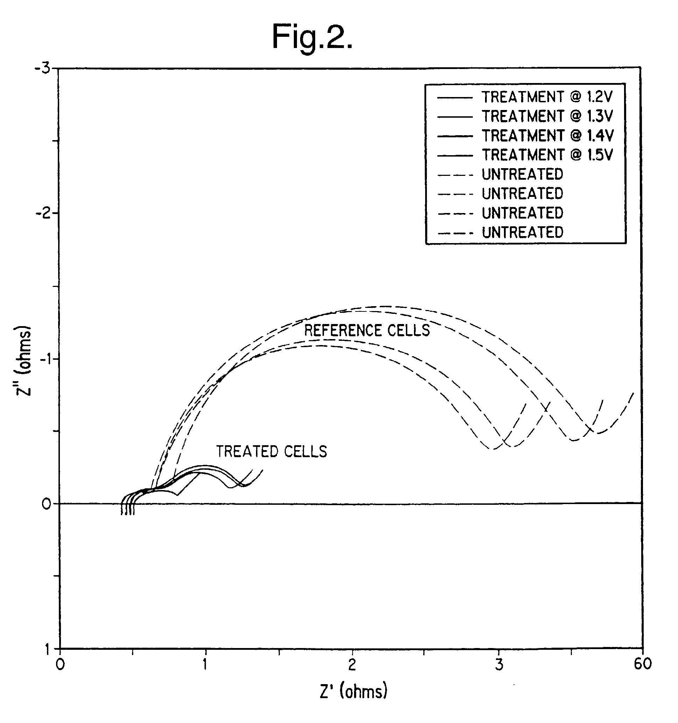

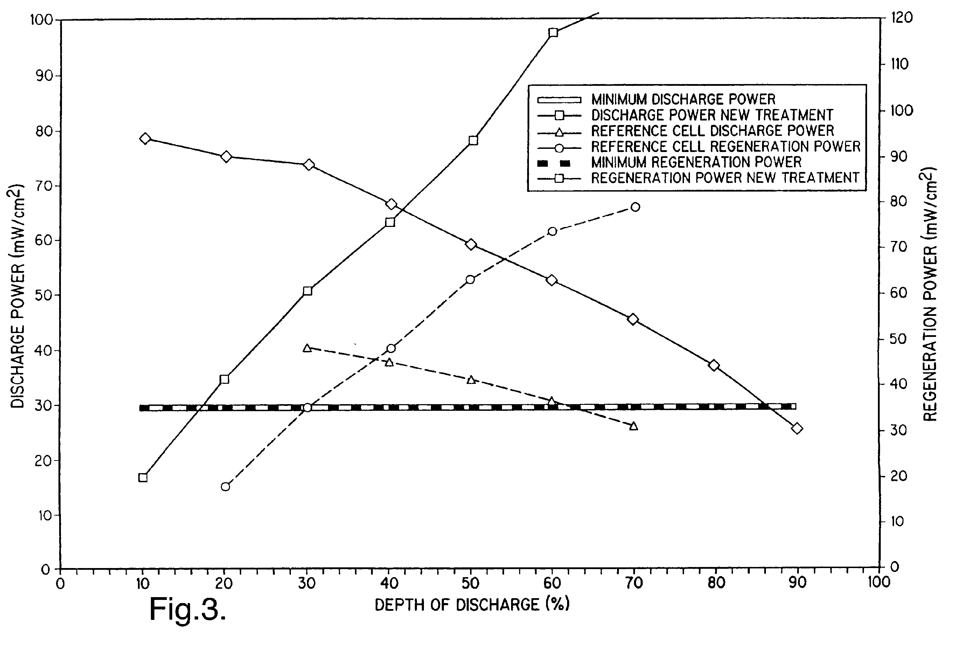

The decrease in cell impedance is further illustrated in FIG. 2 where the cell impedance measured by electrochemical impedance spectroscopy (EIS) of four cells treated according to the present invention versus the impedance of untreated reference cells is depicted. The cell impedance was measured using 2mV amplitude in the frequency range 10⁵-10⁻² Hz. As illustrated, the impedance of the four treated cells by a float charge in the voltage range of 1.2-1.5V for 48 hours is substantially lower than the impedance of the four untreated reference cells. FIG. 3 shows the charge and discharge power of the cell treated by a float charge at 1.4V for 48 hours compared with the power of the untreated reference cell as measured using a hybrid pulse power characterization (HPPC) test. As shown in FIG. 3, the treated cell according to the present invention has about 70% higher power than the power of the untreated reference cell. In each of FIGS. 2 and 3, the polarization amplitude was 2mV.

### EXAMPLE 2

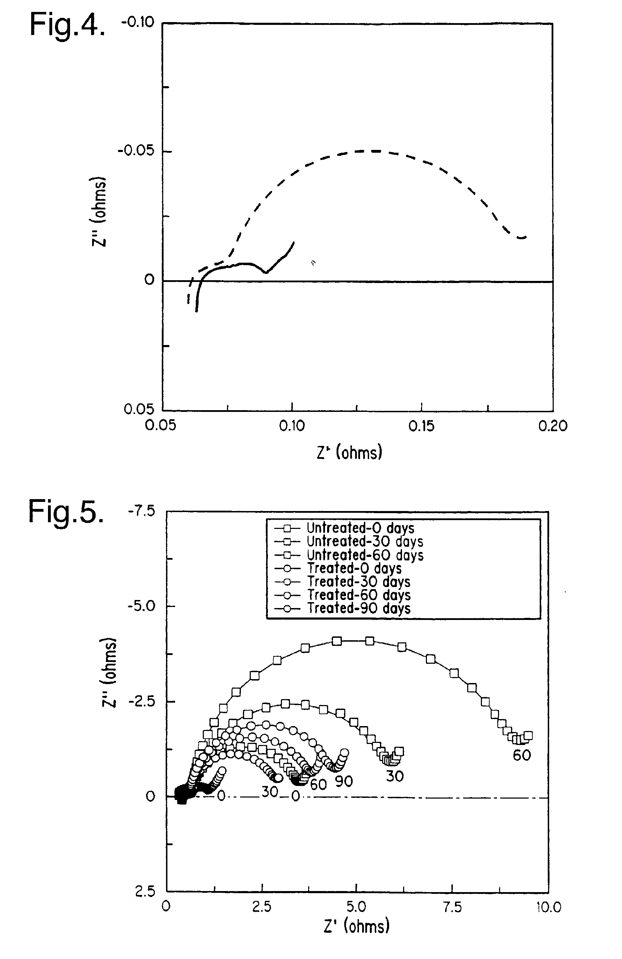

A lithium-ion PVdF polymer 250 cm² Bellcore type test cell was used for comparative measurement. An Al doped LiCo0.2Ni0.8O₂ positive electrode and a natural graphite negative electrode were used. The two electrodes were separated with a PVdF based polymer separator. The cell was activated with 1 M LiPF₆ electrolyte dissolved in EC:EMC (ethylene carbonate:ethyl-methyl carbonate). The cell was then hermitically closed and a 1V voltage was applied from an external power source to the cell for a period of about 48 hours. A standard negative electrode formation cycle was then applied at a charge-discharge rate of C/5 (i.e., current=cell capacity/5 hours). The cell was then subjected to EIS impedance measurement in the frequency range of 10⁴-5 x 10⁻² Hz and 5mV amplitude. The cell impedance measured is shown by the solid line in FIG. 4. The cell electrolyte was then extracted and the water content in the cell electrolyte measured using a Karl Fischer titration method. The water content measured in the cell electrolyte was 24□ 10 ppm.

A reference cell with the same chemistry described above was used for comparative measurement. The cell was activated with the same 1 M LiPF₆ dissolved in EC:EMC electrolyte. The cell was then closed and a standard negative electrode formation cycle was applied at a charge-discharge rate of C/5. The cell was then subjected to EIS impedance measurement in the same frequency range at 10⁴-5 x 10⁻² Hz and 5mV amplitude. The cell impedance measured is shown by the dashed line in FIG. 4. The cell electrolyte was then extracted and the water content in the cell electrolyte was measured using the same Karl Fischer titration method. The water content was 158□ 10 ppm.

The treated cell according to the present invention exhibits substantially lower cell impedance than the untreated reference cell and about six times lower water content than the untreated reference cell.

### EXAMPLE 3

A 20 cm experimental lithium-ion cell was prepared according to the present invention as described in Example 2, but with a 1.5V pretreatment in accordance with the present invention. A comparative reference cell was also prepared as described in Example 2. The impedance response of the treated cell of the present invention was measured after 0, 30, 60 and 90 days calendar life test at 55□ C. Impedance response of the reference cell was measured after 0, 30 and 60 days calendar life test at 55□ C. The results are provided in FIG. 5. After a 90 day calendar life test at 55□ C, the lithium-ion cell of the present invention exhibited an even lower impedance than the untreated reference cells after only a 30 day calendar life test. FIG. 5 demonstrates that the cell prepared according to the present invention has a significantly longer calendar life than an untreated reference cell. Further, lithium-ion cells prepared according to the present invention exhibit significantly better elevated temperature calendar life than untreated reference cells.

While the present invention has been illustrated by the description of an embodiment thereof, and while the embodiment has been described in considerable detail, it is not intended to restrict or in any way limit the scope of the appended claims to such detail. Additional advantages and modifications will readily appear to those skilled in the art. The invention in its broader aspects is therefore not limited to the specific details, representative apparatus and method and illustrative examples shown and described. Accordingly, departures may be made from such details without departing from the scope or spirit of applicant□s general inventive concept.

## Claims

1. A method for preparing a lithium-ion or lithium-ion polymer battery, the method comprising:
providing a cell having a negative electrode, a positive electrode, and a separator therebetween, at least one of the electrodes containing carbon;
providing a lithium salt-based electrolyte between said positive and negative electrodes, wherein the cell contains moisture as an impurity; and
thereafter electrochemically treating the cell by applying a voltage selected to keep the potential of the carbon-containing electrode in the range of about 1.0V to about 3.0V versus a lithium reference electrode, wherein said voltage is applied for a period of time sufficient to cause electrochemical reaction on the carbon-containing electrode to combine the cell moisture in a solid state compound.

2. The method of claim 1, wherein electrochemically treating the cell includes applying the voltage from an external source in the range of about 0.1 to about 2.8 volts.

3. The method of claim 1, wherein electrochemically treating the cell includes applying a float charge, a float discharge, or a combination thereof.

4. The method of claim 1, wherein electrochemically treating the cell includes applying one or more voltage sweeps, one or more voltage pulses, or a combination thereof.

5. The method of claim 1, further comprising formatting the cell by at least one full cycle in a voltage range sufficient to cause solid electrolyte interface formation on the carbon-containing electrode.

6. The method of claim 1, wherein electrochemically treating the cell includes applying the voltage at a temperature in the range of about -40 to about 120□ C.

7. The method of claim 1, wherein electrochemically treating the cell includes applying the voltage for a period of about 1 hour to about 5 days.

8. The method of claim 1, further comprising repeating the step of electrochemically treating the cell periodically during subsequent cycling of the cell.

9. A method for preparing a lithium-ion or lithium-ion polymer battery, the method comprising:
providing a cell having a negative electrode, a positive electrode, and a separator therebetween, at least one of the electrodes containing carbon;
providing a lithium salt-based electrolyte between said positive and negative electrodes, wherein the cell contains moisture as an impurity;
providing oxygen in the cell; and
thereafter electrochemically treating the cell by applying a voltage selected to keep the potential of the carbon-containing electrode (a) more positive than the potential necessary for formation of a solid electrolyte interface by reduction of the electrolyte on the carbon, and simultaneously (b) more negative than the equilibrium potential of the oxygen to insure oxygen reduction on the carbon-containing electrode, wherein said voltage is applied for a period of time sufficient to cause reaction between the oxygen and moisture in the cell.

10. The method of claim 9, wherein electrochemically treating the cell includes applying the voltage from an external source in the range of about 0.1 to about 2.8 volts.

11. The method of claim 9, wherein electrochemically treating the cell includes applying a float charge, a float discharge, or a combination thereof.

12. The method of claim 9, wherein electrochemically treating the cell includes applying one or more voltage sweeps, one or more voltage pulses, or a combination thereof.

13. The method of claim 9, wherein providing oxygen in the cell includes dissolving oxygen in the electrolyte.

14. The method of claim 9, wherein providing oxygen in the cell includes adsorbing oxygen onto at least one of the electrodes.

15. The method of claim 9, wherein providing oxygen in the cell includes entrapment of oxygen in the cell from the environment.

16. The method of claim 9, wherein providing oxygen in the cell is before, during or after providing the electrolyte.

17. The method of claim 9, wherein the partial pressure of the oxygen in the cell is maintained in a range of about 0.0001 to about 1.0 atmospheres.

18. The method of claim 17, wherein the partial pressure of the oxygen in the cell is maintained in a range of about 0.001 to about 0.1 atmospheres.

19. The method of claim 9, further comprising formatting the cell by at least one full cycle in a voltage range sufficient to cause solid electrolyte interface formation on the carbon-containing electrode.

20. The method of claim 9, wherein electrochemically treating the cell includes applying the voltage at a temperature in the range of about -40 to about 120□ C.

21. The method of claim 9, wherein electrochemically treating the cell includes applying the voltage for a period of about 1 hour to about 5 days.

22. The method of claim 9, further comprising repeating the step of electrochemically treating the cell periodically during subsequent cycling of the cell.

23. A method for preparing a lithium-ion or lithium-ion polymer battery, the method comprising:
providing a cell having a negative carbon electrode, a transition metal chalcogenide positive electrode, and a separator therebetween;
providing a lithium salt-based electrolyte between said positive and negative electrodes, wherein the cell contains moisture as an impurity;
providing oxygen in the cell; and
electrochemically treating the cell by applying a voltage selected to keep the potential of the negative carbon electrode (a) more positive than the potential necessary for formation of a solid electrolyte interface by reduction of the electrolyte on the negative carbon electrode, and simultaneously (b) more negative than the equilibrium potential of the oxygen to insure oxygen reduction on the negative carbon electrode, wherein said voltage is applied for a period of time sufficient to cause reaction between the oxygen and moisture in the cell.

24. The method of claim 23, wherein electrochemically treating the cell includes applying the voltage from an external source in the range of about 0.1 to about 2.8 volts.

25. The method of claim 23, wherein electrochemically treating the cell includes applying a float charge, a float discharge, or a combination thereof.

26. The method of claim 23, wherein electrochemically treating the cell includes applying one or more voltage sweeps, one or more voltage pulses, or a combination thereof.

27. The method of claim 23, wherein providing oxygen in the cell includes dissolving oxygen in the electrolyte.

28. The method of claim 23, wherein providing oxygen in the cell includes adsorbing oxygen onto at least one of the electrodes.

29. The method of claim 23, wherein providing oxygen in the cell includes entrapment of oxygen in the cell from the environment.

30. The method of claim 23, wherein providing oxygen in the cell is before, during or after providing the electrolyte.

31. The method of claim 23, wherein the partial pressure of the oxygen in the cell is maintained in a range of about 0.0001 to about 1.0 atmospheres.

32. The method of claim 31, wherein the partial pressure of the oxygen in the cell is maintained in a range of about 0.001 to about 0.1 atmospheres.

33. The method of claim 23, further comprising formatting the cell by at least one full cycle in a voltage range sufficient to cause solid electrolyte interface formation on the negative carbon electrode.

34. The method of claim 23, wherein electrochemically treating the cell includes applying the voltage at a temperature in the range of about -40 to about 120□ C.

35. The method of claim 23, wherein electrochemically treating the cell includes applying the voltage for a period of about 1 hour to about 5 days.

36. A method of preparing a lithium-ion or lithium-ion polymer battery, the method comprising:
providing a cell having a negative electrode, a transition metal chalcogenide composite positive electrode containing a carbon additive, and a separator therebetween;
providing a lithium salt-based electrolyte between said positive and negative electrodes, wherein the cell contains moisture as an impurity;
providing oxygen in the cell; and
electrochemically treating the cell by applying a voltage selected to keep the potential of the positive electrode (a) more positive than the potential necessary for formation of a solid electrolyte interface by reduction of the electrolyte on the carbon additive, and simultaneously (b) more negative than the equilibrium potential of the oxygen to insure oxygen reduction on at least the carbon additive in the positive electrode, wherein said voltage is applied for a period of time sufficient to cause reaction between the oxygen and moisture in the cell.

37. The method of claim 36, further comprising repeating the step of electrochemically treating the cell periodically during subsequent cycling of the cell.

38. The method of claim 36, wherein electrochemically treating the cell includes applying the voltage from an external source in the range of about 1.0 to about 2.8 volts.

39. The method of claim 36, wherein electrochemically treating the cell includes applying a float charge, a float discharge, or a combination thereof.

40. The method of claim 36, wherein electrochemically treating the cell includes applying one or more voltage sweeps, one or more voltage pulses, or a combination thereof.

41. The method of claim 36, wherein the partial pressure of the oxygen in the cell is maintained in a range of about 0.0001 to about 1.0 atmospheres.

42. The method of claim 41, wherein the partial pressure of the oxygen in the cell is maintained in a range of about 0.001 to about 0.1 atmospheres.

43. The method of claim 36, wherein electrochemically treating the cell includes applying the voltage at a temperature in the range of about -40 to about 120□ C.

44. The method of claim 36, wherein electrochemically treating the cell includes applying the voltage for a period of about 1 hour to about 5 days.

45. A method for preparing and operating a lithium-ion or lithium-ion polymer battery, the method comprising:
providing a cell having a negative electrode, a positive electrode, and a separator therebetween, at least one of the electrodes containing carbon;
providing a lithium salt-based electrolyte between said positive and negative electrodes, wherein the cell contains moisture as an impurity;
operating the cell, whereby oxygen is generated within the cell; and
periodically electrochemically treating the cell during the operating step by applying a voltage selected to keep the potential of the carbon-containing electrode (a) more positive than the potential necessary for formation of a solid electrolyte interface by reduction of the electrolyte on the carbon, and simultaneously (b) more negative than the equilibrium potential of the oxygen to insure oxygen reduction on the carbon-containing electrode, wherein said voltage is applied for a period of time sufficient to cause reaction between the oxygen and moisture in the cell.

46. The method of claim 45, wherein electrochemically treating the cell includes applying the voltage from an external source in the range of about 0.1 to about 2.8 volts.

47. The method of claim 45, wherein electrochemically treating the cell includes applying a float charge, a float discharge, or a combination thereof.

48. The method of claim 45, wherein electrochemically treating the cell includes applying one or more voltage sweeps, one or more voltage pulses, or a combination thereof.

49. The method of claim 45, wherein the partial pressure of the oxygen in the cell is maintained in a range of about 0.0001 to about 1.0 atmospheres.

50. The method of claim 49, wherein the partial pressure of the oxygen in the cell is maintained in a range of about 0.001 to about 0.1 atmospheres.

51. The method of claim 45, wherein electrochemically treating the cell includes applying the voltage at a temperature in the range of about -40 to about 120□C.

52. The method of claim 45, wherein electrochemically treating the cell includes applying the voltage for a period of about 1 hour to about 5 days.
